## Europäisches Patentamt
## European Patent Office
## Office européen des brevets

(11) Veröffentlichungsnummer: **0 195 319**
**B1**

(12) # EUROPÄISCHE PATENTSCHRIFT

(45) Veröffentlichungstag der Patentschrift:
**02.08.89**

(51) Int. Cl.⁴: **B 23 D 33/10,** B 21 K 27/06

(21) Anmeldenummer: **86102950.2**

(22) Anmeldetag: **06.03.86**

(54) **Warmschere.**

(30) Priorität: **16.03.85 DE 3509603**

(43) Veröffentlichungstag der Anmeldung:
**24.09.86 Patentblatt 86/39**

(45) Bekanntmachung des Hinweises auf die Patenterteilung:
**02.08.89 Patentblatt 89/31**

(84) Benannte Vertragsstaaten:
**DE FR GB IT**

(56) Entgegenhaltungen:
**EP-A-0 187 577**
**BE-A-662 792**
**DE-C-345 724**

(73) Patentinhaber: **ELHAUS, Friedrich Wilhelm, 21, Dorfstrasse, D-7761 Moos (DE)**

(72) Erfinder: **ELHAUS, Friedrich Wilhelm, 21, Dorfstrasse, D-7761 Moos (DE)**

(74) Vertreter: **Liesegang, Roland, Dr.- Ing., FORRESTER & BOEHMERT Widenmayerstrasse 4 Postfach 22 01 37, D-8000 München 22 (DE)**

## Beschreibung

Die Erfindung betrifft eine Warmschere zum Scheren von angewärmtem, langgestrecktem metallischen Gut, insbesondere Gußbarren aus Leichtmetell, mit den Merkmalen des Oberbegriffs des Patentanspruchs 1, (DE-C-2 604 418).

Eine Warmschere dieser Art gehört auch zum Stand der Technik nach Art. 54 (3) EPÜ (EP-A-0 187 577).

Bei der bekannten Warmschere (DE-C-2 604 418) ist ein einstellbarer Anschlag am Gestell der Warmschere mit der Gutzuführlinie fluchtend lediglich in und entgegen der Gutzuführrichtung verschieblich angeordnet. Ein Ausstoßer ist getrennt davon am Maschinengestell unterhalb der Gutzuführlinie angeordnet. Zum Scheren wird ein Abschnitt der Fördervorrichtung, welche zum Abtransport des gescherten Gutstückes dient, in eine Position angehoben, in welcher ein an der Fördervorrichtung befestigter Trog das abzuscherende Gutende zwischen dem beweglichen Scherelement und der Anschlagvorrichtung hält. Mit der Scherbewegung des beweglichen Scherelementes vertikal nach unten wird auch die Fördervorrichtung in die Ausstoßposition abgesenkt. Zur Übergabe an die Fördervorrichtung in der unteren Ausstoßposition wird der Ausstoßer betätigt.

Die bekannte Warmschere ist konstruktiv aufwendig. Es muß außerdem bei jedem Schervorgang die Fördervorrichtung auf- und abbewegt werden. Dies macht die Warmschere abhängig von der Fördervorrichtung und verlängert die Nebenzeiten. Außerdem ist die Fördervorrichtung aufwendig.

Es ist auch eine Warmschere bekannt, bei der der Ausstoßer zusammen mit einer Anschlagschraube in Fluchtung mit der Gutzuführlinie am Maschinengestell angeordnet ist (GB-A-183 392). Hierbei wird das gescherte Gutstück durch eine Öffnung im Halter des beweglichen Scherelementes längs der Gutzuführlinie in Gegenrichtung zur Transportrichtung des ungescherten Gutes ausgestoßen. Dies ist sehr umständlich, weil das ungescherte Gut zum Freimachen für das Ausstoßen des gescherten Gutstückes zunächst zurückgeschoben werden muß, um Platz für das gescherte Gutstück zu schaffen. Der Abtransport des gescherten Gutstückes aus der Gutzuführlinie ist noch komplizierter als bei dem oben erläuterten Stand der Technik (DE-C-2 604 418).

Beim kalten Ablängen von Stangenmaterial ist es bekannt, eine kalt abzulängende Stange mittels eines Paares feststehender Klemmbacken zu greifen und mittels eines Paares beweglicher Klemmbacken abzulängen. Die Länge des zu schneidenden Stangenstückes wird durch einen Anschlag bestimmt, welcher in das Paar bewegliche Klemmbacken hineinfahren kann und das abzulängende Stück in diesem abstützt. Nach dem Ablängen wirkt der Anschlag als Ausstoßer. Das abzulängende oder abgelängte Stangenstück wird allein durch die beweglichen Klemmbacken unterstützt, was aufgrund der Steifigkeit des kalten Stangenmaterials unkritisch ist. Das Ablängen von kalten Metallstangen ist aufgrund der Sprödigkeit des kalten Materials unproblematisch hinsichtlich des Erzielens eines sauberen, unverformten Schnittes, so daß der Fachmann aufgrund der ganz unterschiedlichen Problematik beim kalten Ablängen keine Anregungen sucht, wenn er die im folgenden geschilderten Problempunkte der bekannten Warmscheren vermeiden will.

Beim Warmscheren treten nämlich große Kräfte in Querrichtung und Längsrichtung des zu schneidenden Materials aufgrund dessen Warmplastizität auf. Solche Kräfte führen zu schiefen Schnitten und unerwünschten Verformungen der Gutstücke an den Schnittstellen.

Es ist daher Aufgabe der Erfindung, eine Warmschere der eingangs beschriebenen Art so auszubilden, daß schiefe Schnitte und unerwünschte Verformungen der zu scherenden Gutstücke vermieden sind und gleichzeitig eine insbesondere bezüglich der Anordnung und Ausbildung der Fördervorrichtung sowie der Überführung der gescherten Gutstücke auf die Fördervorrichtung vereinfachte Konstruktion geschaffen ist.

Zur Lösung dieser Aufgabe sind bei einer Warmschere gemäß der Erfindung die Merkmale des Patentanspruchs 1 vorgesehen.

Bei der Erfindung werden sowohl der längeneinstellbare Anschlag als auch die Unterstützungsvorrichtung gemeinsam mit dem Scherhub des beweglichen Scherelementes mitbewegt. Dadurch wird das zu scherende bzw. das gescherte Gutstück gegen die beim Scheren ausgeübten Querkräfte teils im beweglichen Scherelement und teils in der Unterstützungseinrichtung sowie gegen die erwähnten Längskräfte am Anschlag während der ganzen Scherbewegung bis in die Ausstoßposition unterstützt. Somit ist jegliche Unterstützung durch die Fördervorrichtung entbehrlich. Aus diesem Grunde kann die Fördervorrichtung stets in unveränderlicher Lage in der Ausstoßposition verbleiben, so daß die Fördervorrichtung nicht nur wesentlich vereinfacht sondern auch unabhängig von der Warmschere gemacht werden kann.

Wenn der Anschlag auch zum Ausstoßen, d.h. Überführen des Gutstückes auf die Fördervorrichtung benutzt werden soll, findet die Ausstoßbewegung parallel, jedoch entgegengesetzt zur Gutzuführrichtung statt, in welcher das Langgestreckte Gut normalerweise aus einem Ofen zur Warmschere zugeführt wird. Dies ermöglicht es, die Fördervorrichtung in platzsparender Weise zwischen dem Beschickungsende der Warmschere und dem Abgabeende des Ofens anzuordnen. Darüberhinaus wird die Warmschere im Vergleich zur eingangs beschriebenen bekannten Warmschere aufgrund der Doppelfunktion des Anschlages (Anschlagfunktion und Ausstoßfunktion) vereinfacht.

Bei einer bevorzugten Ausführung der Warmschere ist der Anschlag in einem Vorbau gleitend geführt, der schwenkbar am Halter des beweglichen Scherelementes angelenkt sein kann, wobei die ebenfalls im Vorbau untergebrachte Unterstützungseinrichtung das zu scherende oder gescherte Gutstück gegen die Querkräfte abstützt.

Der Anschlag umfaßt vorteilhaft eine mit dem Stirnende des zu scherenden Gutes zusammenwirkende Stirnplatte, die zur Anpassung an unterschiedliche Gutdurchmesser austauschbar ist. So wird ein großflächiger Anschlag geschaffen, der das zu scherende Gut zuverlässig über dessen ganze Stirnendfläche abstützt.

Da die Fördervorrichtung unabhängig von der Warmschere nach der Erfindung ist, kann bei einer Parallelanordnung von zwei Warmscheren gemäß der Erfindung nur eine einzige Fördervorrichtung zum Entfernen der gescherten Stücke genügen, wobei die beiden Warmscheren diese Gutstücke entweder gemeinsam oder abwechselnd anliefern.

Bedeutende Vorteile der Erfindung lassen sich wie folgt zusammenfassen:

- die Fördervorrichtung für die gescherten Gutstücke ist aufgrund der Tatsache vereinfacht, daß sie sich nicht mit dem beweglichen Scherelement mitbewegt und deshalb in stets gleichbleibender Lage am Ort des Ausstoßens der Gutstücke plazierbar ist;
- durch die große Anschlagfläche des Anschlages und die gleichzeitige Unterstützung mittels der Unterstützungseinrichtung wird eine optimale Abstützung in Scherrichtung und in Längsrichtung des Gutes erreicht, so daß Schnitte hoher Qualität ohne das Auftreten von unerwünschten Verformungen an der Schnittstelle erzielbar sind;
- bei Verwendung des Anschlags auch als Ausstoßer ergibt sich eine konstruktive Vereinfachung, weil ein gesonderter Ausstoßer vermieden ist;
- Längentoleranzen des gescherten Gutstückes können aufgrund des fein einstellbaren Anschlages über eine große Einstellänge hervorragend eingehalten werden;
- selbst kurze Gutstücke können in hoher Qualität aufgrund der Tatsache geschert werden, daß der Anschlag bis dicht an die Scherebene herangefahren werden kann;
- mittels der Unterstützungsvorrichtung wird das gescherte Gutstück über seine gesamte Länge während der Scherbewegung gegen die durch das Scheren verursachten Querkräfte und gegen das Eigengewicht bis zur Überführung des Gutstückes in den unabhängigen Förderer abgestützt, was eine optimale Handhabung des Gutstückes gewährleistet;
- die Wegschwenkbarkeit des Vorbaus vom Halter des beweglichen Scherelementes ermöglicht ein schnelles und einfaches Auswechseln der Scherelemente;
- im Falle eines Verklemmens kann das Gut in Richtung in den Ofen zurückgestoßen werden.

Die Erfindung ist im folgenden anhand schematischer Zeichnungen an Ausführungsbeispielen mit weiteren Einzelheiten näher erläutert. Es zeigen:

Fig. 1 einen schematischen Längsschnitt durch eine Warmschere nach der Erfindung;

Fig. 2 eine schematische Draufsicht auf eine Parallelanordnung von zwei Öfen mit jeweils nachgeschalteten Warmscheren und einer quer dazu angeordneten Fördervorrichtung zum Abtransport der gescherten Gutstücke.

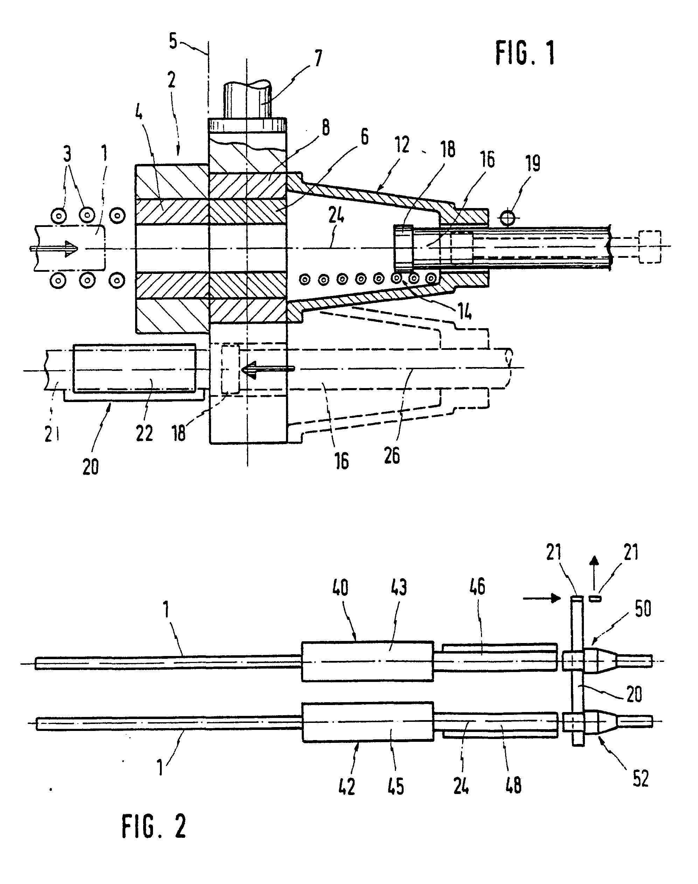

In Fig. 1 ist mit der Bezugszahl 2 das Gestell der Warmschere bezeichnet. In diesem Gestell ist ein feststehender Scherring 4 unterstützt. Das Gestell trägt ferner einen vertikal ausgerichteten Betätigungszylinder 7, der einen beweglichen Scherringhalter 8 mit darin aufgenommenem beweglichen Scherring 6 zum Scheren längs der Scherkante 5 vertikal nach unten bewegt.

Der vom Zylinder 7 nach unten bewegbare Scherringhalter 8 trägt einen Vorbau 12 mit darin untergebrachter Rollbahn 14 zum Unterstützen des langgestreckten Gutes 1. Ein längeneinstellbarer Anschlag 16 in Form der Kolbenstange einer nicht gezeigten hydraulischen Kolben-Zylinder-Einheit trägt an seinem freien Ende eine auswechselbare Stirnplatte 18. Der Anschlag 16 ist in Richtung der Gutzuführungslinie 24 verschiebbar. Mit 19 ist ein Winkel- bzw. Längenkodierer bezeichnet. Zum Auswechseln der Scherringe 4, 6 ist der Vorbau 12 in einer Horizontalebene ausschwenkbar am bewegbaren Scherringhalter 8 angelenkt.

Auf der Beschickungsseite der Warmschere ist unterhalb des festen Scherringes 4 ein Querförderer 20 mit mindestens einer Transportschale 22 zur Aufnahme eines gescherten, strichpunktiert gezeichneten Gutstückes 21 fest angeordnet, wobei die Transportschale 22 in Ausstoßposition dargestellt ist.

Mit der beschriebenen Warmschere wird wie folgt gearbeitet:

Längs Führungsrollen 3 wird das zu scherende Gut, beispielsweise eine Aluminium-Rundstange 1, durch die Öffnung der beiden Scherringe 4, 6 auf den Rollen der Rollbahn 14 gegen die Stirnplatte 18 des einstellbaren Anschlags 16 geschoben. Der Anschlag ist beim Scheren als Gegenhalter wirksam, welcher durch das Scheren erzeugten Verschiebekräften entgegenwirkt. Die in Querrichtung zu dem Gut wirkenden Scherkräfte sowie dessen Eigengewicht werden durch die Rollbahn 14 aufgenommen. Dies gewährleistet eine rechtwinklige Scherfläche am abgescherten Barren ohne das Auftreten von unerwünschten Verformungen.

Durch Betätigen des Zylinders 7 wird der Schervorgang ausgelöst, wobei der bewegliche Scherring 6 zusammen mit dem Vorbau 12 nach unten in die Ausstoßposition (Ausstoßlinie 26) fährt, wie dies in Fig. 1 gestrichelt angedeutet ist.

Ist die Ausstoßposition erreicht, so bewegt sich die Kolbenstange 16 in Fig. 1 gesehen nach links in Pfeilrichtung und stößt dabei das abgescherte Gutstück 21 in die in Ausstoßposition befindliche Transportschale 22 des Querförderers 20 aus. Von dort wird das gescherte Gutstück in Richtung quer zur Zeichenebene abtransportiert, z. B. zu der Beschickungsvorrichtung einer Strangpresse.

In Fig. 2 sind zwei Öfen 40, 42 mit einer Vorwärmzone 43, 45 und einer direkt beheizten Zone 46, 48 sowie je einer nachgeschalteten Warmschere 50, 52 der oben beschriebenen Bauart nebeneinander angeordnet. Zwischen der Beschickungsseite der Warmscheren 50, 52 und der Entnahmeseite der Öfen 40, 42, d. h. in Fig. 2 gesehen dem rechten Ende der Zonen 46, 48, ist ein einziger Querförderer 20 angeordnet, über den die von den beiden Scheren abgescherten Gutstück 21 alternativ oder gemeinsam in die hier nicht gezeigten Transportschalen des Querförderers 20 abgegeben und an dessen Ende zunächst parallel zu der Zuführlinie 24 für das Gut 1 und dann quer dazu einer nicht gezeigten Strangpresse zugeführt werden.

## Patentansprüche

1. Warmschere zum Scheren von angewärmtem, langgestrecktem metallischen Gut, insbesondere Gußbarren aus Leichtmetall, mit einem feststehenden und einem beweglichen Scherelement (4, 6), welche eine Scherebene definieren, wobei das gescherte Gutstück (21) gemeinsam mit dem Scherhub des beweglichen Scherelementes (6) in eine Ausstoßposition außerhalb der Zuführlinie des Gutes bewegt und in dieser Ausstoßposition auf eine Fördervorrichtung (20) übergeben wird, sowie mit einem längeneinstellbaren Anschlag (16) und einer Unterstützungsvorrichtung (14) für das gescherte oder zu scherende Gutstück, dadurch gekennzeichnet, daß der einstellbare Anschlag (16) und die Unterstützungsvorrichtung (14) an dem beweglichen Scherelement (8) zu einer gemeinsamen Bewegung mit diesem angebracht sind und daß nach einem Scherhub des beweglichen Scherelementes (6) der einstellbare Anschlag (16) zu einem Ausstoßen des gescherten Gutstückes in eine Richtung betätigbar ist, die parallel, jedoch entgegengesetzt zur Zurführrichtung des ungescherten Gutes ist.

2. Warmschere nach Anspruch 1, dadurch gekennzeichnet, daß der einstellbare Anschlag (16) eine auswechselbare Stirnplatte (18) für das Stirnende des zu scherenden Gutes aufweist, um eine Anpassung an unterschiedliche Gutquerschnitte zu ermöglichen.

3. Warmschere nach einem der Ansprüche 1 oder 2, dadurch gekennzeichnet, daß ein Vorbau (12) vorgesehen ist, in welchem die Unterstützungsvorrichtung (14) fest montiert und der Anschlag (16) gleitend geführt ist, und daß der Vorbau (12) an einem Halter (8) für das bewegliche Scherelement (6) auf einer der Gutzuführseite entgegengesetzten Seite der Warmschere angebracht ist.

4. Warmschere nach Anspruch 3, dadurch gekennzeichnet, daß der Vorbau (12) schwenkbar an dem Kalter (8) angelenkt ist.

5. Warmschere nach einem der Ansprüche 1 bis 4, dadurch gekennzeichnet, daß der Anschlag (16) längs einer Stützbahn für das gescherte oder zu scherende Gutstück (21) bis zu einer Endposition nächst der Scherebene einstellbar ist, um eine Unterstützung quer zu und über die ganze Lange von Gutstücken unterschiedlicher Länge während des gesamten Scherhubes des beweglichen Scherelementes zu schaffen.

6. Warmschere nach einem der Ansprüche 1 bis 5, dadurch gekennzeichnet, daß der Anschlag (16) von dem Kolben eines Druckmittelzylinders gebildet ist, und daß die Unterstützungsvorrichtung als Rollbahn (14) ausgebildet ist, deren Rollen im Vorbau (12) drehbar gelagert sind.

7. Warmschere nach einem der Ansprüche 1 bis 6, dadurch gekennzeichnet, daß die Fördervorrichtung als Querförderer (20) ausgebildet ist, der von der Scherbewegung unabhängig auf der Beschickungsseite der Warmschere fest angeordnet ist.

8. Warmschere nach einem der Ansprüche 1 bis 7, dadurch gekennzeichnet, daß sie (50) parallel zu einer zweiten gleichartigen Warmschere (52) angeordnet ist, und daß die Fördervorrichtung (20) beiden Warmscheren (50, 52) gemeinsam zugeordnet ist.

## Claims

1. Hot shear for shearing warmed, elongate metallic material, particularly billets of light metal, with a fixed and a movable shearing element (4, 6) which define a shearing plane, whereby the sheared piece of material (21) moves with the shearing stroke of the movable shearing element (6) into a discharge position outside the feed line of the material and in this discharge position is transferred onto a conveyor device (20), and with a longitudinally adjustable abutment (16) and a support device (14) for the piece of material which has been sheared or is to be sheared, characterised in that the adjustable abutment (16) and the support device (14) are mounted on the movable shearing element (6) so as to move together with it and that after a shearing stroke of the movable shearing element (6) the adjustable abutment (16) may be actuated to discharge the sheared piece of material in a direction which is parallel but opposite to the feed direction of the unsheared material.

2. Hot shear as claimed in claim 1, characterised in that the adjustable abutment (16) has a replaceable front plate (18) for the front end of the material to be sheared in order to enable an adaptation to differing material cross-sections.

3. Hot shear as claimed in one of claims 1 or 2, characterised in that a projection (12) is provided in which the support device (14) is fixedly mounted and the abutment (16) is slidably guided and that the projection (12) is secured to a holder (8) for the movable shearing element (6) on a side of the hot shear opposite to the material feed side.

4. Hot shear as claimed in claim 3, characterised in that the projection (12) is pivotally connected to the holder (8).

5. Hot shear as claimed in one of claims 1 to 4, characterised in that the abutment (16) is adjustable up to an end position adjacent the shearing plane along a support track for the piece of material (21) which has been sheared or is to be sheared in order to provide support transverse to, and over the entire length of, pieces of material of differing length over the entire shearing stroke of the movable shearing element.

6. Hot shear as claimed in one of claims 1 to 5, characterised in that the abutment (16) is constituted by the piston of a pressure medium cylinder and that the support device is constructed as a roller track (14) whose rollers are rotatably mounted in the projection (12).

7. Hot shear as claimed in one of claims 1 to 6, characterised in that the conveyor device is constructed as a transverse conveyor (20) which is fixedly arranged independently of the shearing movement on the loading side of the hot shear.

8. Hot shear as claimed in one of claims 1 to 7, characterised in that it (50) is arranged parallel to a second similar hot shear (52) and that the conveyor device (20) is jointly associated with both hot shears (50, 52).

## Revendications

1. Cisaille pour produits chauds destinée à cisailler un matériau métallique chauffé et étiré, en particulier des lingots venus de coulée en un métal léger, comprenant des éléments cisailleurs fixe et mobile (4, 6) qui délimitent un plan de cisaillement, la pièce de matériau cisaillée (21) étant déplacée, concurremment à la course de cisaillement de l'élément cisailleur mobile (6), jusqu'à une position d'expulsion en dehors de la ligne d'amenée du matériau et étant, dans cette position d'expulsion, transférée à un dispositif convoyeur (20), ainsi qu'une butée (16) de longueur réglable et un dispositif de soutien (14) pour la pièce de matériau cisaillée ou devant être cisaillée, caractérisée par le fait que la butée réglable (16) et le dispositif de soutien (14) sont animés, sur l'élément cisailleur mobile (6), d'un mouvement conjoint avec de dernier et par le fait que, après une course de cisaillement de l'élément cisailleur mobile (6), la butée réglable (16) peut être actionnée, en vue d'une expulsion de la pièce de matérieau cisaillée, dans une direction qui est parallèle, mais toutefois opposée à la direction d'amenée du matériau non cisaillé.

2. Cisaille pour produits chauds, selon la revendication 1, caractérisée par le fait que la butée réglable (16) présente une plaque extrême interchangeable (18) pour extrémité frontale du matériau devant être cisaillé, afin de permettre une adaptation à des sections de matériaux différentes.

3. Cisaille pour produits chauds, selon l'une des revendications 1 ou 2, caractérisée par le fait qu'il est prévu une structure d'avant-corps (12), dans laquelle le dispositif de soutien (14) est monté fixe et la butée (16) est guidée à coulissement et par le fait que la structure d'avant-corps (12) est installée sur un support (8) destiné à l'élément cisailleur mobile (6), d'un côté de la cisaille pour produits chauds qui est opposé au côté amenée du matériau.

4. Cisaille pour produits chauds, selon la revendication 3, caractérisée par le fait que la structure d'avant-corps (12) est articulée à pivotement sur le support (8).

5. Cisaille pour produits chauds, selon une des revendications 1 à 4, caractérisée par le fait que la butée (16) est réglable le long d'une trajectoire de soutien de la pièce de matériau (21) cisaillée ou devant être cisaillée, jusqu'à une position extrême proche du plan de cisaillement, de manière à conférer, durant la course de cisaillement intégrale de l'élément cisailleur mobile, un soutien sur toute la longueur de pièces de matériau de longueurs différentes, transversalement par rapport à cette longueur.

6. Cisaille pour produits chauds, selon l'une des revendications 1 à 5, caractérisée par le fait que la butée (16) est formée par le piston d'un vérin à fluide pressurisé et par le fait que le dispositif de soutien est réalisé sous la forme d'une piste (14) à rouleaux, dont les rouleaux sont montés à rotation dans la structure d'avant-corps (12).

7. Cisaille pour produits chauds, selon l'une des revendications 1 à 6, caractérisée par le fait que le dispositif convoyeur est réalisé sous la forme d'un convoyeur transversal (20) qui est installé de manière fixe, indépendamment du mouvement de cisaillement, du côté alimentation de la cisaille pour produits chauds.

8. Cisaille pour produits chauds, selon l'une des revendications 1 à 7, caractérisée par le fait qu'elle (50) est disposée parallèlement à une seconde cisaille (52) de même type, pour produits chauds et par le fait que le dispositif convoyeur (20) est associé en commun aux deux cisailles (50, 52) pour produits chauds.

FIG. 1

FIG. 2

1